# EUROPEAN PATENT SPECIFICATION

(11) **EP 1 507 837 B1**
(45) Date of publication and mention of the grant of the patent: **09.01.2008**
(21) Application number: 03756171.9
(22) Date of filing: 08.05.2003
(51) Int. Cl.: C09J 7/02

(54) **SEGMENTED CURABLE TRANSFER TAPES**
SEGMENTIERTE HÄRTBARE TRANSFERBÄNDER
RUBAN DE TRANSFERT A SEGMENTS DURCISSABLE

(30) Priority: 28.05.2002 US 157260
(43) Date of publication of application: 23.02.2005
(73) Proprietor: 3M Innovative Properties Company, St. Paul, MN 55133-3427 (US)
(72) Inventor: MEIXNER, Larry A.,, Saint Paul, MN 55133-3427 (US); LEBOW, Leslie, M., Saint Paul, MN 55133-3427 (US); NOE, Susan, C., Saint Paul, MN 55133-3427 (US); KROPP, Michael, A., Saint Paul, MN 55133-3427 (US)
(74) Representative: Meyers, Hans-Wilhelm
(86) International application number: PCT/US2003/014592
(87) International publication number: WO 2003/102102

(56) References cited:
- WO-A-93/05123
- US-A- 3 301 741
- US-B1- 6 197 397
- US-B1- 6 299 966

## Description

### Field of the Invention

This invention relates to segmented curable transfer tapes. In particular, the invention relates to segmented curable transfer tapes including a carrier web and a curable adhesive precursor in recesses embossed into the web to provide segments of said curable adhesive precursor.

### Background of the Invention

Transfer tapes find wide application in bonding two substrates or surfaces together because of the advantages offered over dispensing and applying adhesives from a tube or container. In using transfer tapes, it is often desired to transfer adhesive to the smaller of the two substrates, such as a part, component or fastener being bonded. Often, the objective is to cover as much of this substrate with adhesive as possible, so as to enhance the bond, but not to have adhesive extending beyond the perimeter of this substrate.

WO 93/05123 discloses a web with recesses therein which contain pressure sensitive adhesive. The recesses in the carrier web maintain the adhesive in a discrete pattern during handling and storage and prevent lateral flow of the pressure sensitive adhesive.

A common method for accomplishing transfer of adhesive is to die cut the adhesive or adhesive and liner of a transfer tape to the shape of the surface such that the adhesive just covers the smaller of the two surfaces being bonded. The die cutting approach is widely used in industry despite the cost and complications of cutting and indexing the adhesive to the part. Die cutting becomes more difficult as the part either increases in complexity or is significantly reduced in size. Additionally, die cut transfer tapes incorporating soft, low molecular weight (eg., oligomeric) adhesives must be used shortly after cutting. The ability of such adhesives to flow after cutting allows them to migrate across the cut and then reform into a continuous adhesive layer. Soft adhesives also contaminate the cutting instrument requiring frequent cleaning if clean cuts are consistently desired. Furthermore, die cutting of transfer tapes that include curable adhesives must be done under conditions that prevent premature curing.

An alternate approach is to formulate an adhesive that readily shears through its thickness. In this case the adhesive is coated onto a carrier film. When the surface of a part or component is applied to the adhesive coated carrier film and separated therefrom, the adhesive shears, that is, tears through its thickness, leaving the adhesive only on the surface of the part or component. Such a transfer tape is available from 3M Company (3M) under the designation "Transfer Tape Product 909." Such tapes are generally limited to applications not requiring high performance adhesion, for example, as an assembly aid for mechanical fasteners.

Another method for getting adhesive only on the smaller of the two surfaces being bonded, such as a part or component, is to divide the adhesive into segments on the carrier web. When a part is placed in contact with these adhesive segments and then separated, only the segments contacted by the part will be transferred to the part. In such methods the adhesive is applied to a carrier by conventional means such as rotogravure printing, silk-screen printing, or intermittent extrusion of an adhesive melt. Additionally, the adhesive can be directly coated on a carrier web with subsequent cutting and stripping of an adhesive matrix from the web to provide the substantially noncontiguous raised pressure sensitive adhesive segments. The raised adhesive segments may be dots, diamonds, stars, triangles, or mixtures thereof. The segmented adhesive transfer tapes may be used in an automated or manual dispensing apparatus.

Such segmented adhesive transfer tapes employ pressure sensitive adhesives as their adhesive ability is required to transfer the adhesive segments from the carrier web to the part being bonded simply through contact pressure. Furthermore, this adhesive ability also allows the subsequent bonding to a second substrate. One of the noted shortcomings of such prior art segmented adhesive transfer tapes is that in forming the adhesive pattern on the carrier film, there is a tendency for many pressure sensitive adhesives to slump and flow laterally. This problem is exacerbated when patterned adhesive segments are either closely spaced or exhibit a high thickness to width ratio. After depositing the adhesive pattern on a carrier web it is normal practice in the balance of the manufacturing, distribution and use of these tapes to stack sheets of the tape or wrap the tape into a roll. The force on the raised non-contiguous adhesive segments is such that the segments have a tendency to move laterally under cold flow conditions, that is, under ambient conditions, such that a continuous adhesive sheet is undesirably formed.

The formation of a continuous adhesive bond after transfer to a substrate, if desired, becomes more difficult when the adhesive is modified or selected to prevent lateral flow during handling and storage under ambient conditions. This is because the same adhesive behavior that prevents lateral flow during handling and storage prevents lateral flow and the formation of a continuous bond after application to a substrate. Given the limited adhesive strength inherent to pressure sensitive adhesives, it is preferred that when pressure sensitive adhesives are used that they eventually laterally flow and form a continuous layer so as to maximize bond strength. When bonding small components, it is desirable that the adhesive segments be small because the larger the adhesive segments the more the adhesive will extend beyond the perimeter of the part and ultimately will limit the size of the parts for which the tape is useful. In efforts to counteract these difficulties and maintain a balance between the competing factors of creating a continuous adhesive bond after application yet inhibiting lateral flow of the adhesive prior to application, practitioners in the art have made compromises relative to the selection of the pressure sensitive adhesive, the spacing between adhesive segments and the height of the segments.

### Summary of the Invention

It is desirable to provide a segmented curable adhesive precursor transfer tape that resists premature curing of the adhesive precursor, avoids the problems associated with die cutting, and provides high bond strength without the problems associated with trying to balance the competing factors of creating a continuous adhesive bond after application yet inhibiting lateral flow of the adhesive precursor prior to application.

It is also desirable to provide a segmented curable adhesive precursor transfer tape that provides for rapid cure times after the segmented curable adhesive precursor has been applied to a substrate.

Generally, the present invention relates to a curable transfer tape including a carrier web having two oppositely parallel surfaces where at least one of the surfaces includes a series of recesses therein and a curable adhesive precursor composition in the recesses to provide segments of the curable adhesive precursor in the recesses.

Additionally, the present invention relates to a method for inhibiting the premature curing of a diffusible agent curable adhesive precursor that includes contacting at least one surface of the adhesive precursor with at least one surface of a carrier web having two essentially oppositely parallel surfaces where the at least one surface comprises a series of recesses therein and said carrier web can be removed from the curable adhesive precursor.

Furthermore, the present invention relates to a method for increasing the cure rate of a diffusible agent curable adhesive precursor applied to a substrate. The method includes the steps of applying to a substrate a transfer tape including a carrier web having two oppositely parallel surfaces where at least one of the surfaces includes a series of recesses therein and a curable adhesive precursor composition in the recesses by contacting the adhesive precursor layer with the substrate and removing the carrier web, optionally contacting a second substrate with said curable precursor layer, and curing said curable adhesive precursor.

The above summary of the present invention is not intended to describe each disclosed embodiment or every implementation of the present invention. The Figures and the detailed description which follows, more particularly exemplify these embodiments.

### Brief Description of the Drawings

The invention may be more completely understood in consideration of the following detailed description of various embodiments of the invention in connection with the accompanying drawings, in which:
Figure 1 is a schematic cross-sectional view of a first curable adhesive precursor transfer tape of the present invention.
Figure 2 is a schematic cross-sectional view of a second curable adhesive precursor transfer tape of the present invention including a cover sheet.
While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the spirit and scope of the invention.

### Detailed Description of the Preferred Embodiment

The term "diffusible agent" as used herein refers to an agent capable of dissemination as a result of random motion. Such diffusible agents include liquids and gases, for example. Gaseous diffusible agents include water vapor, ethylene oxide, and ammonia, for example. Liquid diffusible agents include water, for example.

The term "curable adhesive precursor" as used herein refers to two types of materials. One type of curable adhesive precursor, diffusible agent curable adhesive precursors, includes materials that cure upon exposure to a diffusible agent. The other type of curable adhesive precursor, heat or radiation curable adhesive precursors, includes materials that cure upon exposure to heat or radiation. The term radiation as used above and below includes any actinic radiation such as, for example, electromagnetic radiation in the UV or visible range of the electromagnetic spectrum, and electron-beam radiation. In either case the curable adhesive precursor can be reacted to form an adhesive capable of bonding, for example, two substrates to each other. Such curable adhesive precursors undergo an irreversible change in modulus after exposure to a diffusible agent, heat or radiation and over time reach, essentially, a maximum bond strength. The change in modulus is typically due to the formation of at least one chemical bond, for example a covalent bond.

The term "pressure sensitive adhesive" as used herein refers to a category of adhesives, which, in solvent free form, are aggressively and permanently tacky at room temperature and firmly adhere to a variety of dissimilar surfaces upon mere contact without the need of more than finger or hand pressure. They require no activation by a diffusible agent, heat, radiation, or solvent to exert a strong adhesive holding force toward such materials as paper, plastic, glass, wood, cement, and metals, for example. They have a sufficiently cohesive holding and elastic nature so that, despite their aggressive tackiness, they can be handled with the fingers and removed from a smooth surface without leaving a residue.

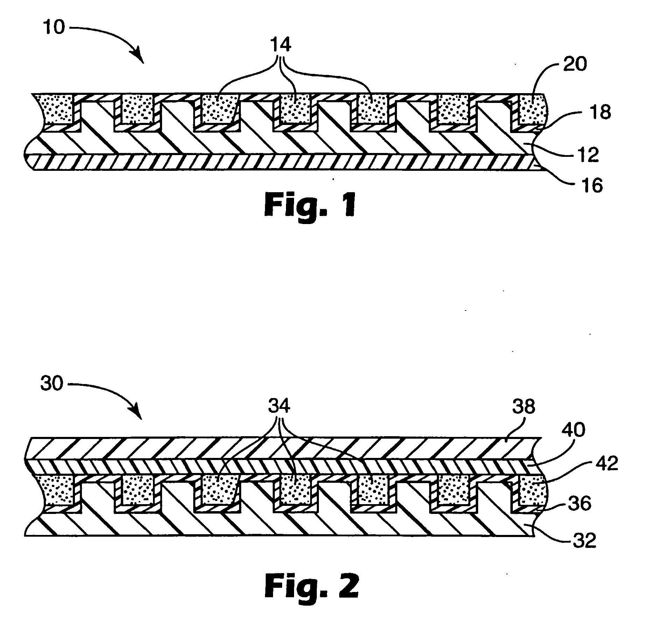

Transfer tapes, as disclosed herein, including a series of recesses and a curable adhesive precursor composition therein, are useful for transferring a curable adhesive precursor to a substrate after which the curable adhesive precursor can be cured to achieve, essentially, its maximum bond strength. The transferred curable precursor in this case may have the appearance of a scored adhesive film. The recesses can act as individual pockets or containers for the curable adhesive precursor and allow the precursor to be patterned into individual segments. Typically, the transfer tapes of the present invention include curable adhesive precursors that are essentially free of pressure-sensitive adhesive characteristics after curing. One embodiment of a transfer tape 10 of the present invention is shown in FIG. 1. Tape 10 is composed of flexible carrier web 12, having two oppositely parallel surfaces, that has been embossed to have a plurality of recesses 14 on one side and a flat surface on the backside. The backside of the embossed carrier web can optionally be coated with a release coating 16. Additionally, the recessed front side can optionally be coated with release coating 18. A curable adhesive precursor 20 is coated into the recesses using any of a variety of coating techniques known in the art such as knife or die coating, for example. When the tape is stacked in sheets or wound into a roll and then unwound the curable adhesive precursor remains in the recesses 14 of the embossed carrier web. The greater contact area between the curable precursor and the recesses than between the precursor and the flat backside of the embossed web tends to cause the adhesive precursor to remain in the recesses. By selecting release coatings 16 and 18 such that coating 16 provides a lower level of release than coating 18 the curable adhesive precursor segments will remain in the recesses of the embossed carrier web. In this construction 10 of the tape, the curable adhesive precursor is transferred directly from the recesses of the embossed carrier web to a substrate to be bonded such as an object or part, for example. Transfer of the curable adhesive precursor from the embossed carrier web 12 to a substrate may be accomplished by contacting a substrate with the exposed curable adhesive precursor 20 and applying pressure to either the substrate or the transfer tape in the areas where transfer of curable adhesive precursor is desired. Pressure can be applied to the entire surface of the substrate, for example, or to select portions of the substrate, with a stylus for example. When the two are separated, curable adhesive precursor 20 transfers to the substrate from recesses 14. The transferred curable adhesive precursor will have a pattern, typically of spaced-apart curable adhesive precursor segments, in conformity with the pattern of recesses 14.

In the embodiment of Figure 1 the release values (peel adhesion, dyne/cm) of the release coatings 16 and 18 can alternately be selected so that after filling the recesses 14 of the embossed carrier web 12 with adhesive precursor, wrapping the tape in a roll and then unwrapping, the patterned curable adhesive precursor 20 transfers to the flat backside of the embossed carrier web 12. The recesses 14 in the embossed carrier web 12 are now substantially void of curable adhesive precursor. The patterned curable adhesive precursor may then be transferred to a substrate by contacting the exposed curable adhesive precursor 20 with the substrate and then separating the article from the embossed carrier web 12. The curable adhesive precursor 20 becomes transferred from the flat backside of the embossed carrier web to the substrate in any given area defined by mutual contact under pressure.

One embodiment of a transfer tape 30 of the present invention is shown in FIG. 2. Tape 30 is composed of flexible carrier web 32 that has been embossed to have a plurality of recesses 34 on one side and a flat surface on the backside. The recesses 34 are optionally coated with release coating 36. A cover sheet 38 is optionally coated with release coating 40. Transfer tape 30 may be stacked in sheets or wound in a roll. Release coatings 36 and 40 are selected so that when the cover sheet 38 is removed from the embossed carrier web 32 the curable adhesive precursor 42 remains in recesses 34. Transfer of the curable adhesive precursor from the embossed carrier web 32 to a substrate may be accomplished by contacting a substrate with the exposed curable adhesive precursor 42 and applying pressure to either the substrate or the transfer tape in the areas where transfer of curable adhesive precursor is desired. Pressure can be applied to the entire surface of the substrate, for example, or to select portions of the substrate, with a stylus for example. When the two are separated, curable adhesive precursor 42 transfers to the substrate from recesses 34. The transferred curable adhesive precursor will have a pattern, typically of spaced-apart curable adhesive precursor segments, in conformity with the pattern of recesses 34.

In the embodiment of Figure 2 the release values (peel adhesion, dyne/cm) of the release coatings 36 and 40 can alternately be selected so that when cover sheet 38 is separated from embossed carrier web 32 the patterned curable adhesive precursor 42 is transferred from the embossed carrier web 32 to the cover sheet 38. The curable adhesive precursor is then transferred to a substrate from the cover sheet 38.

As stated above, the curable adhesive precursor is a material that upon curing by either a diffusible agent or heat or electromagnetic radiation forms an adhesive capable of bonding. A wide variety of coatable curable materials can be used in the present application. The viscosity of such materials should permit the coating operation to provide a curable adhesive precursor layer with the desired properties, i.e., the viscosity should be low enough to permit essentially complete filling of the recess in the embossed carrier web. In some instances there can exist a layer of continuous curable adhesive precursor connecting the curable adhesive precursor segments. In the case of diffusible agent curable adhesive precursors the thickness of this layer of continuous diffusible agent curable adhesive precursor with respect to the thickness of the entire layer of diffusible agent curable adhesive precursor, including the adhesive segments, can be quite large. For example, the height of the diffusible agent curable adhesive segments above the layer of diffusible agent continuous curable adhesive precursor is at least 1 percent the total thickness of the entire layer of diffusible agent curable adhesive precursor, including the adhesive precursor segments. In other examples, the height of the diffusible agent curable adhesive segments above the layer of continuous diffusible agent curable adhesive precursor is at least 10 percent, at least 33 percent, or at least 50 percent the total thickness of the entire layer of diffusible agent curable adhesive precursor, including the adhesive precursor segments. In a further example, the height of the diffusible agent curable adhesive precursor segments above the layer of continuous diffusible agent curable adhesive precursor is greater than 99 percent the total thickness of the entire layer of diffusible agent curable adhesive precursor, including the curable precursor segments. The ease of transferring or dispensing only portions of the curable precursor to a substrate is facilitated by minimizing the thickness of the layer of continuous diffusible agent curable precursor with respect to the thickness of the entire layer of diffusible agent curable precursor, including the precursor segments.

In the case of heat or actinic radiation curable adhesive precursors the thickness of this layer of continuous heat or actinic radiation curable adhesive precursor with respect to the thickness of the entire layer of heat or actinic radiation curable adhesive precursor, including the adhesive precursor segments, should preferably be quite small. For example, the height of the heat or actinic radiation curable adhesive precursor segments above the layer of continuous heat or actinic radiation curable adhesive precursor is at least 33 percent, or at least 50 percent the total thickness of the entire layer of heat or actinic radiation curable adhesive precursor, including the adhesive precursor segments. In a further example, the height of the heat or actinic radiation curable adhesive precursor segments above the layer of continuous heat or actinic radiation curable adhesive precursor is greater than 99 percent the total thickness of the entire layer of heat or actinic radiation curable adhesive precursor, including the adhesive precursor segments.

### Diffusible agent curable adhesive precursors

Suitable materials useful as diffusible agent curable adhesive precursors include those that can be used to prepare a curable composition that cures upon exposure to fluids, such as liquids and gases, for example water vapor, ethylene oxide, ammonia and water. Diffusible agent curable adhesive precursors that cure upon exposure to moisture, such as atmospheric moisture, or water are typically referred to as moisture curing materials. Suitable moisture curing materials include isocyanate-terminated urethanes, silane-containing urethanes, silane-terminated urethanes, and any combinations thereof, as well as room temperature vulcanizing ("RTV") silicones.

### Urethane Materials

The term "urethane materials" as used herein applies to polymers and prepolymers made from the reaction product of a compound containing at least two isocyanate groups (-N=C=O), referred to herein as "isocyanates", and a compound containing at least two active-hydrogen containing group. Examples of active-hydrogen containing groups include primary alcohols, secondary alcohols, phenols and water; primary and secondary amines (which react with the isocyanate to form a urea linkage); and silanol-containing materials. A wide variety of isocyanate-terminated materials and appropriate co-reactants are well known, and many are commercially available (see for example, Gunter Oertel, "Polyurethane Handbook", Hanser Publishers, Munich (1985)).

In one embodiment storage-stable curable adhesive precursor layers based on urethane materials may be employed. These are provided by using either an isocyanate or an active hydrogen-containing compound that is blocked. The term "blocked" as used herein refers to a compound that has been reacted with a second compound (i.e. "blocking group") such that its reactive functionality is not available until such time as the blocking group is removed, for example by heating, or by further reaction, such as with water. Examples of blocked isocyanates include those that have been co-reacted with phenol, methyl ethyl ketoxime, and ε-caprolactam. Examples of blocked active-hydrogen containing compounds include aldehyde or ketone blocked amines (known as ketimines); aldehyde blocked aminoalcohol (known as oxazolidines); and amines that have been complexed with a salt such as sodium chloride.

When blocked isocyanates are used, examples of suitable co-reactants include polyether polyols such as poly(oxypropylene) glycols, ethylene oxide capped poly(oxypropylene) glycols, and poly(oxytetramethylene) glycols; diamino poly(oxypropylene) glycols; aromatic amine terminated poly(propylene ether) glycols; styrene-acrylonitrile graft polyols; poly(oxyethylene) polyols; polyester polyols such as polyglycol adipates, polyethylene terephthalate polyols, and polycaprolactone polyols; polybutadiene polyols, hydrogenated polybutadiene polyols, polythioether polyols, silicone carbinol polyols, polybutylene oxide polyols, acrylic polyols, carboxy-functional polypropylene oxide polyols, carboxy functional polyester polyols; and aromatic amine-terminated poly(tetrahydrofuran). Suitable urethane resins include blocked urethanes such as that available under the trade designation "Adeka Resin QR-9276" from Asahi Denka Kogyo K.K. Tokyo, Japan, and urethane modified epoxides such as that available under the trade designation "Rutapox VE 2306" from Rutgers Bakelite GmbH, Duisburg, Germany.

Useful diffusible agent curable adhesive precursors include polyurethane prepolymers such as graft polyurethane prepolymers. Such polyurethane prepolymers include the reaction product of a polyol, polyisocyanate and an optional macromonomer and an optional silane reagent, for example. The graft polyurethane prepolymer includes a polyurethane backbone having at least one macromonomer sidechain covalently bonded or grafted thereto. The term "macromonomer" means an oligomer bearing a terminal moiety having two hydroxyl groups that can copolymerize with monomers to form graft copolymers with pendent, preformed polymer chains. The term "prepolymer" means that the polyurethane backbone is terminated by at least one moisture-reactive group such as an isocyanate group (NCO) or a silane group (SiY₃), for example. In one example, the graft polyurethane prepolymer includes NCO termination and is made by reacting one or more macromonomer(s) bearing a terminal moiety having two hydroxyl groups, one or more polyol(s), and an excess of one or more polyisocyanate(s).

The macromonomer may be described by the following formula:

A--X--B Structure 1

wherein A is hydrogen or a fragment of an initiator; B is hydrogen, a fragment of a chain transfer agent, or a moiety derived from a capping agent that has been reacted to yield terminal dihydroxyl groups, with the proviso that A and B are not the same and only one of A and B bears a terminal moiety having two hydroxyl groups; and X includes polymerized units of at least one monomer that is free from active hydrogen-containing moieties.

The macromonomer includes polymerized units of a wide variety of monomers and may be crystalline or amorphous. When the macromonomer is amorphous, then it is preferred that the polyol be crystalline. Conversely, when the polyol is amorphous, then the macromonomer is preferably crystalline. It is also preferred that the polymerized units of the macromonomer consist essentially of (meth)acrylate monomers.

The polyol used to make the prepolymer of the invention may be crystalline or amorphous. When the macromonomer is amorphous, however, the polyol is preferably crystalline. Conversely, when the polyol is amorphous, the macromonomer is preferably crystalline. More preferably, the macromonomer is crystalline and mixtures of amorphous and crystalline polyols are used to allow greater flexibility in tailoring the final properties of the composition. In general, the use of crystalline polyols provides crystalline segments to the polyurethane backbone that may contribute to the resulting properties (for example, hot melt adhesive strength) of the graft polyurethane prepolymer.

Examples of useful crystalline polyols for the invention include polyoxyalkylene polyols, the alkylene portion of which is a straight chain such as poly(oxyethylene) diol and poly(oxytetramethylene) diol; polyester polyols which are the reaction products of polyol(s) having from 2 to about 12 methylene groups and polycarboxylic acid(s) having from 2 to about 12 methylene groups; and polyester polyols made by ring-opening polymerization of lactones such as ε-caprolactone ; and blends thereof. Additional useful amorphous hydroxy-functional materials useful in the present invention also include those reaction products of polyoxyethylene glycol, polyoxypropylene glycol, 1,2-polyoxybutylene glycol, 1,4-polyoxybutylene glycol that are capped or copolymerized with ethylene oxide. The polyether glycol may be the reaction product of propylene oxide copolymerized with ethylene oxide, for example, or those compounds which are homopolymers or copolymers formed from one or more ingredients including ethylene oxide, propylene oxide, 1,2-butylene oxide, 1,4- butylene oxide and mixtures thereof. These materials may have a random or block configuration. The number average molecular weight of the resultant polyether polyol is from about 1000 to about 8000 grams/mole and generally from about 2000 to about 4000 grams/mole. Preferred crystalline polyols include poly(oxytetramethylene) diol, polyhexamethylene adipate diol (made by reacting an excess of 1,6-hexamethylene diol and adipic acid), polyhexamethylene sebacate diol (made by reacting an excess of 1,6-hexamethylene diol and sebacic acid), and polyhexamethylene dodecanedioate diol (made by reacting an excess of 1,6-hexamethylene diol and dodecanedioic acid). Examples of commercially available crystalline polyols include, for example, poly(oxytetramethylene) polyols sold under the tradename TERATHANE (available from E. I. duPont de Nemours & Co.); polyester polyols sold under the tradenames LEXOREZ (available from Inolex Chemical Co.), RUCOFLEX (available from Ruco Polymer Corp.), and FORMREZ (available from Witco Chemical Co.); and polycaprolactone polyols sold under the tradename TONE (available from Union Carbide).

Examples of useful amorphous polyols for use in the invention include polyoxyalkylene polyols, the alkylene portion of which is a branched alkylene such as poly(oxypropylene) diol and poly(oxybutylene) diol; aliphatic polyols such as poly(butadiene) diol, hydrogenated poly(butadiene) diol, and poly(ethylene-butylene) diol; polyester polyols formed during reactions between and/or among the following diols and diacids: neopentyl diol, ethylene diol, propylene diol, 1,4-butanediol, 1,6-hexanediol, adipic acid, orthophthalic acid, isophthalic acid, and terephthalic acid; and blends thereof. Preferably, the amorphous polyol is glassy or liquid at room temperature and exhibits a Tg less than or equal to 50°C, more preferably less than or equal to 30°C. Preferred amorphous polyols include poly(oxypropylene) diol; poly(oxybutylene) diol; and poly(ethylene-butylene) diol. Examples of commercially available amorphous polyols include, for example, poly(oxypropylene) diols sold under the tradename ARCOL such as ARCOL 1025 or 2025 (available from Arco Chemical Co.); poly(oxybutylene) diols sold under the tradename POLYGLYCOL such as B 100-2000 (available from Dow Chemical Co.); and poly(ethylene-butylene) diol sold as HPVM 2201 (available from Shell Chemical Co.).

Other useful polyols include polyetherdiol esters such as diethylene glycol adipate and dipropylene glycol adipate for example, and those derived from C₃₆ dimer diols and dimer acids, such as dimer-acid-based polyester polyols (e.g. "PRIPOL" and "PRIPLAST" available from Uniqema, Wilmington, DE).

The term "polyisocyanate" refers to materials having two or more -NCO groups. Useful polyisocyanates for the present invention include organic, aliphatic, cycloaliphatic, and aromatic isocyanate compounds. Preferably, they are aromatic isocyanates such as diphenylmethane-2,4'-diisocyanate and/or diphenylmethane 4,4'-diisocyanate (MDI) ; tolylene-2,4-diisocyanate and -2,6-diisocyanate (TDI) and mixtures thereof. Other examples of isocyanates include: naphthylene-1,5-diisocyanate ; triphenylmethane-4,4',4"-triisocyanate; 2,4 (or 2,4/2,6) toluene diisocyanate; 1,4-phenylene diisocyanate; 4,4'-cyclohexylmethane diisocyanate (H₁₂ MDI) ; hexamethylene-1,6-diisocyanate (HDI) ; isophorone diisocyanate (IPDI) ; tetramethylxylene diisocyanate; and xylene diisocyanate. Of these, MDI is preferred. A list of useful commercially available polyisocyanates is found in the Encyclopedia of Chemical Technology, Kirk-Othmer, 4th. Ed., Vol. 14, p.902-925, John Wiley & Sons, New York (1995).

Useful silane reagents for preparing silane functional prepolymers from NCO-terminated prepolymers may be amine-, hydroxy- or thiol-functional. In general, they have the formula RSiY₃ wherein: R is a hydrocarbon group (e.g., an alkyl, alkenyl, aryl or alkaryl group) having primary or secondary amine-, hydroxy- or thiol-functionality; and Y is a monovalent heteroalkyl or aryl group such as a dialkylketoxamino group (e.g., methylethylketoxamino, dimethylketoxamino, or diethylketoxamino), alkoxy group (e.g., methoxy, ethoxy, or butoxy), alkenoxy group (e.g., isopropenoxy), acyl group (e.g., acetoxy), alkamido group (e.g., methylacetamido or ethylacetamido), or arylamido group (e.g., benzamide).

Particularly preferred silane reagents are dialkylketoaminosilanes because they exhibit good shelf-stability and do not form deleterious byproducts upon cure. Examples include 3-aminopropyltris(methylethylketoxime) silane and (3-aminopropyl)trialkoxysilane.

Silane-terminated prepolymers may also be made using a one step method by reacting one or more dihydroxy functional macromonomer(s), one or more polyol(s), one or more polyisocyanate(s), and one or more isocyanate-terminated silane(s). Isocyanate-terminated silanes include isocyanatoalkyl silanes such as (3-isocyanatopropyl) trialkoxysilanes including (3-isocyanatopropyl) triethoxysilane, (3-isocyanatopropyl) trimethoxysilane, etc. One commercially available material is isocyanatopropyl triethoxysilane available from Silar Laboratories (Scotia, N.Y.).

Graft polyurethane prepolymers may be prepared by techniques known in the art. Typically, the components are mixed at an elevated temperature, using conventional mixing techniques. It is preferred to mix the components under anhydrous conditions to prevent premature moisture curing. Generally, the prepolymers are prepared without the use of solvents.

To make NCO-terminated prepolymers, the isocyanate equivalents should be present in the reaction mixture in an amount greater than that of the hydroxyl equivalents. The equivalent ratio of isocyanate to hydroxyl groups should be at least 1.2/1, more preferably 1.2/1 to 10/1, most preferably 1.5/1 to 2.2/1.

Further examples of polyurethane prepolymers that can be used in the practice of this invention are described in U.S. Pat. No. 5,908,700, incorporated herein by reference.

### Heat or actinic radiation curable adhesive precursors

Heat or actinic radiation curable adhesive precursors of the present invention are typically capable of crosslinking upon exposure to heat or radiation such as actinic radiation for example. Such materials are referred to herein as "thermosetting". The term "material" as used herein refers to monomers, oligomers, prepolymers, and/or polymers. The heat or actinic radiation curable adhesive precursor typically, upon application of heat, undergoes an initial decrease in viscosity that promotes wetting of the substrate and enhances adhesion and causes a curing reaction. After application of heat or actinic radiation sufficient to accomplish curing, a curable material is referred to herein as cured. Once in the cured state, such materials are referred to herein as "thermoset". Actinic radiation may be used to activate or complete curing. Suitable thermosetting materials include epoxide-containing, cyanate ester-containing and bismaleimide-containing materials, as well as combinations thereof.

### Epoxides

Suitable epoxides include those containing at least two epoxide moieties. Such compounds can be saturated or unsaturated, aliphatic, aromatic or heterocyclic, or can comprise combinations thereof. Suitable epoxides may be solid or liquid at room temperature.

Compounds containing at least two epoxide groups are preferred. A combination of epoxide compounds may be employed, and an epoxide having a functionality of less than two may be used in a combination so long as the overall epoxide functionality of the mixture is at least two. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). It is also within the scope of this invention to use a material with functionality in addition to epoxide functionality but which is essentially unreactive with the epoxide functionality, for example, a material containing both epoxide and acrylic functionality.

A wide variety of commercial epoxides are available and listed in "Handbook of Epoxy Resins" by Lee and Neville, McGraw Hill Book Company, New York (1967) and in "Epoxy Resin Technology" by P. F. Bruins, John Wiley & Sons, New York (1968), and in "Epoxy Resins: Chemistry and Technology, 2nd Edition" by C.A. May, Ed., Marcel Dekker, Inc. New York (1988). Aromatic polyepoxides (i.e., compounds containing at least one aromatic ring structure, e.g., a benzene ring, and at least two epoxide groups) that can be used in the present invention include the polyglycidyl ethers of polyhydric phenols, such as Bisphenol A- or Bisphenol-F type resins and their derivatives, aromatic polyglycidyl amines (e.g., polyglycidyl amines of benzenamines, benzene diamines, naphthylenamines, or naphthylene diamines), polyglycidyl ethers of phenol formaldehyde resole or novolak resins; resorcinol diglycidyl ether; polyglycidyl derivatives of fluorene-type resins; and glycidyl esters of aromatic carboxylic acids, e.g., phthalic acid diglycidyl ester, isophthalic acid diglycidyl ester, trimellitic acid triglycidyl ester, and pyromellitic acid tetraglycidyl ester, and mixtures thereof. Useful aromatic polyepoxides are the polyglycidyl ethers of polyhydric phenols, such as the series of diglycidyl ethers of Bisphenol-A, (for example, those available under the trade designations "EPON 828," "EPON 1004", "EPON 1001F," "EPON 825,", and "EPON 826," available from Resolution Performance Productions, Houston, Texas; and "DER-330," "DER-331," "DER-332," and "DER-334", available from Dow Chemical Company, Midland, Michigan); diglycidyl ether of Bisphenol F (for example, those under the trade designations EPON" Resin 862", available from Resolution Performance Productions, Houston, Texas; and "ARALDITE GY 281, GY 282, GY 285, PY 306, and PY 307", available from Vantico, Brewster, New York); 1,4-butanediol diglycidyl ether (for example, having the trade designation "ARALDITE RD-2" available from Vantico, Brewster, New York); and polyglycidyl ether of phenol-formaldehyde novolak (for example, having the trade designation "DEN-431" and "DEN-438" available from Dow Chemical Company, Midland, Michigan). The term "derivative" as used herein with reference to heat or radiation curable materials refers to a base molecule with additional substituents that do not interfere with the curing reaction of the base molecule.

Examples of useful mono, di and multifunctional glycidyl ether resins include, but are not limited to, "XB 4122", "MY0510", "TACTIX 556" and "TACTIX 742", available from Vantico, Brewster, New York; and "EPON 1510", "HELOXY Modifier 107" and "HELOXY Modifier 48" available from Resolution Performance Productions, Houston, Texas.

Representative aliphatic cyclic polyepoxides (i.e., cyclic compounds containing one or more saturated carbocyclic rings and at least two epoxide groups, also known as alicyclic compounds) useful in the present invention include the series of alicyclic epoxides commercially available from Dow Chemical, Midland, Michigan, under the trade designation "ERL", such as vinyl cyclohexene dioxide ("ERL-4206"), 3,4-epoxycyclohexylmethyl-3,4-epoxycyclohexane carboxylate ("ERL-4221 "), 3,4-epoxy-6-methylcyclohexylmethyl-3,4-epoxy-6-methylcyclohexane carboxylate ("ERL-4201"), bis(3,4-epoxy-6-methylcycylohexylmethyl)adipate ("ERL-4289"), and dipentenedioxide ("ERL-4269").

Representative aliphatic polyepoxides (i.e., compounds containing no carbocyclic rings and at least two epoxide groups) include 1,4-bis(2,3-epoxypropoxy)butane, polyglycidyl ethers of aliphatic polyols such as glycerol, polypropylene glycol, 1,4-butanediol, and the like, the diglycidyl ester of linoleic acid dimer, epoxidized polybutadiene (for example, those available under the trade designation "OXIRON 2001" from FMC Corp., Philadelphia, Pennsylvania or "Poly bd" from Elf Atochem, Philadelphia, Pennsylvania), epoxidized aliphatic polyurethanes, and epoxy silicones, e.g., dimethylsiloxanes having cycloaliphatic epoxide or glycidyl ether groups.

Examples of suitable epoxide-based curable materials that are commercially available in film form include those available from Minnesota Mining and Manufacturing Company ("3M"), St. Paul, MN under the trade designation "3M Scotch-Weld Structural Adhesive Film" including those having the following "AF" designations: "AF 42", "AF 111", "AF 126-2", "AF 163-2", "AF 3109-2", "AF 191", "AF 2635", "AF 3002", "AF 3024", and "AF 3030FST".

### Cyanate Ester Materials

Suitable cyanate ester materials (monomers and oligomers) are those having two or more -O-C≡N functional groups, including those described in U.S. Patent No. 5,143,785, for example.

Examples of suitable cyanate ester compounds include the following: 1,3- and 1,4-dicyanatobenzene; 2-tert-butyl-1,4-dicyanatobenzene; 2,4-dimethyl-1,3-dicyanatobenzene; 2,5-di-tert-butyl-1,4-dicyanatobenzene; tetramethyl-1,4-dicyanatobenzene, 4-chloro-1,3-dicyanatobenzene; 1,3,5-tricyanatobenzene; 2,2,- or 4,4,-dicyanatobiphenyl; 3,3',5,5',-tetramethyl-4,4',-dicyanatobiphenyl; 1,3-, 1,4-, 1,5-, 1,6-, 1,8-, 2,6-, or 2,7-dicyanatonaphthalene; 1,3,6-tricyanatonaphthalene; bis(4-cyanatophenyl)methane; bis(3-chloro-4-cyanatophenyl)methane; bis(3,5-dimethyl-4-cyanatophenyl)methane; 1,1-bis(4-cyanatophenyl)ethane; 2,2-bis(4-cyanatophenyl)propane; 2,2-bis(3,5-dibromo-4-cyanatophenyl)propane; 2,2-bis(4-cyanatophenyl)-1,1,1,3,3,3-hexafluoropropane; bis(4-cyanatophenyl)ether; bis(4-cyanatophenoxyphenoxy)benzene; bis(4-cyanatophenyl)ketone; bis(4-cyanatophenyl)thioether; bis(4-cyanatophenyl)sulfone; tris(4-cyanatophenyl)phosphite; and tris(4-cyanatophenyl)phosphate. Polycyanate compounds obtained by reacting a phenol-formaldehyde precondensate with a halogenated cyanide are also suitable.

Other suitable materials include, for example, cyanic acid esters derived from phenolic resins as described in U.S Pat. No. 3,962,184, cyanated novolac resins derived from novolac resins as described in U.S. Pat. No. 4,022,755, cyanated bisphenol-type polycarbonate oligomers derived from bisphenol-type polycarbonate oligomers as described in U.S. Pat. No. 4,026,913, cyanato-terminated polyarylene ethers as described in U.S. Pat. No. 3,595,900, dicyanate esters free of ortho hydrogen atoms as described in U.S. Pat. No. 4,740,584, mixtures of di-and tricyanates as described in U.S. Pat. No. 4,709,008, polyaromatic cyanates containing polycyclic aliphatics as described in U.S. Pat. No. 4,528,366, fluorocarbon cyanates as described in U.S. Pat. No. 3,733,349, and other cyanate compositions as described in U.S. Patent Nos. 4,195,132 and 4,116,946.

An exemplary commercially available material is a cyanate ester available from Vantico, Brewster, NY under the trade designation "Quatrex 7187".

### Bismaleimide Materials

Examples of suitable bismaleimide materials, also known as N,N'-bismaleimide monomers and prepolymers, include the N,N'-bismaleimides of 1,2-ethanediamine, 1,6-hexanediamine, trimethyl-1,6-hexanediamine, 1,4-benzenediamine, 4,4'-methylene-bis(benzenamine), 2-methyl-1,4-benzenediamine, 3,3'-methylene-bis(benzenamine), 3,3'-sulfonyl-bis(benzenamine), 4,4'-sulfonyl-bis(benzenamine), 3,3'-oxy-bis(benzenamine), 4,4'-oxy-bis(benzenamine), 4,4'-methylene-bis(cyclohexanamine), 1,3-benzenedimethanamine, 1,4-benzenedimethanamine, and 4,4'-cyclohexane-bis(benzenamine) and mixtures thereof. Other N,N'-bis-maleimides and their process of preparation are described in U.S. Pat. Nos. 3,562,223; 3,627,780; 3,839,358; and 4,468,497, all of which are incorporated herein by reference.

Representative examples of commercially available bismaleimide materials include the series of materials available from Resolution Performance Productions, Houston, Texas under the trade designation "COMPIMIDE", such as 4,4'-bismaleimidodiphenyl methane ("COMPIMIDE Resin MDAB"), and 2,4'-bismaleimidotoluene ("COMPIMIDE Resin TDAB"), from Dexter/Quantum, San Diego, CA under the trade designation "Q-Bond".

### Curatives for Thermosetting Materials

A thermosetting curable material preferably comprises a thermosetting material and a curative or curatives. The term "curative" or "curing agent" is used broadly to include not only those materials that are conventionally regarded as curatives but also those materials that catalyze or accelerate the reaction of the curable material as well as those materials that may act as both curative and catalyst or accelerator. It is also possible to use two or more curatives in combination.

Preferred heat activated curatives for use in the present invention exhibit latent thermal reactivity; that is, they react primarily at higher temperatures (preferably at a temperature of at least 50°C), or react at lower temperatures only after an activation step such as exposure to actinic radiation. This allows the curable adhesive precursor composition to be readily mixed and coated at room temperature (about 23 ± 3°C) or with gentle warming without activating the curative (i.e., at a temperature that is less than the reaction temperature for the curative). One skilled in the art would readily understand which curatives are appropriate for each class of thermosetting materials.

Suitable curatives for epoxide polymerization include polybasic acids and their anhydrides; nitrogen-containing curatives; chloro-, bromo-, and fluoro-containing Lewis acids of aluminum, boron, antimony, and titanium; photochemically activated generators of protic or Lewis acids.

Exemplary polybasic acids and their anhydrides include di-, tri-, and higher carboxylic acids such as oxalic acid, phthalic acid, terephthalic acid, succinic acid, alkyl substituted succinic acids, tartaric acid, phthalic anhydride, succinic anhydride, malic anhydride, nadic anhydride, pyromellitic anhydride; and polymerized acids, for example, those containing at least 10 carbon atoms, such as dodecendioic acid, 10,12-eicosadiendioic acid, and the like.

Nitrogen-containing curatives include, for example, dicyandiamide, imidazoles (e.g. hexakis(imidazole) nickel phthalate), imidazolates, dihydrazides (e.g. adipic dihydrazide and isophthalic dihydrazide), ureas, and melamines, as well as encapsulated aliphatic amines (e.g., diethylenetriamine, triethylenetetraamine, cyclohexylamine, triethanolamine, piperidine, tetramethylpiperamine, N,N-dibutyl-1,3-propane diamine, N,N-diethyl-1,3-propane diamine, 1,2-diamino-2-methyl-propane, 2,3-diamino-2-methylbutane, 2,3-diamino-2-methyl-pentane, 2,4-diamino-2,6-dimethyl-octane, dibutylamine, and dioctylamine). The term "encapsulated" as used herein means that the amine is surrounded by a material that prevents it from acting as a curative until the application of heat. Polymer bound amines or imidazoles may also be used. Pyridine, benzylamine, benzyldimethylamine, and diethylaniline are also useful as heat activated curatives.

Examples of nitrogen-containing curatives include those commercially available from Air Products, Allentown, PA, under the trade designations, "Amicure CG-1200", "AMICURE CG-1400", "Ancamine 2337", "Ancamine 2441", "Ancamine 2014"; and those from Asahi Denka Kogyo K.K. Tokyo, Japan, under the trade designations "Ancamine 4338S" and "Ancamine 4339S"; those from CVC Specialty Chemicals, Mapleshade, NJ, under the trade designations "Omicure U-52" and "Omicure U-410" as well as the other materials in the "Omicure" series; those from Landec, Menlo Park, California, under the trade designations "Intellimer 7001", "Intellimer 7002", "Intellimer 7004", and "Intellimer 7024"; those from Shikoku Fine Chemicals, Japan, and sold by Air Products, as the series of materials available under the trade designation "Curezol"; and those from Ajinomoto Company Inc., Teaneck, New Jersey, as the series of materials available under the trade designation "Ajicure".

Exemplary chloro-, bromo-, and fluoro-containing Lewis acids of aluminum, boron, antimony, and titanium include aluminum trichloride, aluminum tribromide, boron trifluoride, antimony pentafluoride, titanium tetrafluoride, and the like. Preferably, these Lewis acids may be blocked to increase the latency of the thermosetting material. Representative blocked Lewis acids include BF₃-monoethylamine, and the adducts of HSbF₅X, in which X is halogen, -OH, or -OR¹ in which R¹ is the residue of an aliphatic or aromatic alcohol, aniline, or a derivative thereof, as described in U.S. Patent No. 4,503,211, incorporated herein by reference.

Suitable photochemically activated curatives for epoxide polymerization include cationic photocatalysts that generate an acid to catalyze polymerization. It should be understood that the term "acid" can include either protic or Lewis acids. These cationic photocatalysts can include a metallocene salt having an onium cation and a halogen containing complex anion of a metal or metalloid. Other useful cationic photocatalysts include a metallocene salt having an organometallic complex cation and a halogen-containing complex anion of a metal or metalloid which are further described in U.S. Patent 4,751,138 (e.g., column 6, line 65 to column 9, line 45). Other examples of useful photocatalysts include organometallic salts and onium salts, for example, those described in U.S. Pat. No. 4,985,340 (e.g., col. 4, line 65 to col. 14, line 50) and in European Patent Applications 306,161 and 306,162. A suitable photochemically activated curative is a curative commercially available from Ciba Specialty Chemicals, Tarrytown, New York under the trade designation "Irgacure 261".

Suitable curatives for cyanate ester materials include the nitrogen-containing curatives as described for use with epoxides as well as curatives that may be thermally or photochemically activated. Examples of such curatives include organometallic compounds containing a cyclopentadienyl group (C₅ H₅) and derivatives of a cyclopentadienyl group. Suitable curatives include cyclopentadienyl iron dicarbonyl dimer ([C₅H₅Fe(CO)₂]₂), pentamethylcyclopentadienyl iron dicarbonyl dimer ([C₅(CH₃)₅Fe(CO)₂]₂), methylcyclopentadienyl manganese tricarbonyl (C₅H₄(CH₃)Mn(CO)₃), cyclopentadienyl manganese tricarbonyl (C₅H₅Mₙ(CO)₃), all of which are available from Strem Chemical Company, Newburyport, MA. Other suitable curatives include the hexafluorophosphate salt of the cyclopentadienyl iron mesitylene cation (C₅H₅(mesitylene)Fe⁺PF₆), and the trifluoromethanesulfonate salt of the cyclopentadienyl iron mesitylene cation (C₅H₅(mesitylene)Fe⁺(CF₃SO₃⁻)), both of which may be prepared by methods described in U.S. Pat. 4,868,288.

Suitable curatives for bismaleimide materials include the nitrogen containing curatives as described for use with epoxides as well as latent sources of allyl phenol.

### Hybrid Materials

A hybrid material is a combination of at least two components wherein the at least two components are compatible in the melt phase (the melt phase is where the combination of the at least two components is a liquid), the at least two components form a interpenetrating polymer network or semi-interpenetrating polymer network, and at least one component becomes infusible (i.e., the component cannot be dissolved or melted) after application of heat or by other means of curing such as application of light or a diffusible curing agent. A first component is a (a) an ethylenically unsaturated monomer such as, for example, the (meth)acrylic materials described below or (b) a thermosetting material, i.e., monomers, oligomers, or prepolymers (and any required curative) which can form a thermosetting material such as, for example, those materials described above, and the second component is (a) a thermosetting material, or (b) a diffusible agent curable material, i.e., monomers, oligomers, or prepolymers (and any required curative) which can form a diffusible agent curable material such as, for example, those materials described above. The second component is chosen so that it is not reactive with the first component. It may be desirable, however, to add a third component which may be reactive with either or both of the first component and second component for the purpose of, for example, increasing the cohesive strength of the cured hybrid material.

Examples of useful materials having at least one ethylenically unsaturated group include those materials having at least one vinyl, vinylene, acrylamide, or (meth)acrylate moiety. Such ethylenically unsaturated materials can be monomeric or polymeric. Acrylamide group containing materials include N,N-dimethyl acrylamide, N-octyl acrylamide. (Meth)acrylate group containing materials include isooctyl (meth)acrylate, isobornyl (meth)acrylate, 2-ethylhexyl (meth)acrylate, benzyl (meth)acrylate, butyl (meth)acrylate, 4-cyanobutyl (meth)acrylate, 2-cyanoethyl (meth)acrylate, cyclohexyl (meth)acrylate, 2-ethoxyethyl (meth)acrylate, 2-ethoxypropyl (meth)acrylate, ethyl (meth)acrylate, 2-ethylbutyl (meth)acrylate, heptyl (meth)acrylate, hexyl (meth)acrylate, isobutyl (meth)acrylate, 2-methylbutyl (meth)acrylate, 3-methylbutyl (meth)acrylate, nonyl (meth)acrylate, 3-pentyl (meth)acrylate, propyl (meth)acrylate, octadecyl (meth)acrylate, dodecyl (meth)acrylate, 2-ethylhexyl (meth)acrylate, octyl (meth)acrylate, 1,4-butanediol di(meth)acrylate, 1,6-hexandiol di(meth)acrylate, 2-phenoxyethyl (meth)acrylate, and homopolymers or copolymers thereof.

Such materials containing at least one ethylenically unsaturated group may be polymerized using methods well known to those skilled in the art. These include the use of polymerization initiators activated by heat or actinic radiation.

For example, polymerization of useful (meth)acrylate-containing materials is carried out using thermal energy, electron-beam radiation, ultraviolet radiation, and the like. Such polymerizations can be facilitated by a polymerization initiator, which can be a thermal initiator or a photoinitiator. Examples of suitable photoinitiators include, but are not limited to, benzoin ethers such as benzoin methyl ether and benzoin isopropyl ether, substituted benzoin ethers such as anisoin methyl ether, substituted acetophenones such as 2,2-dimethoxy-2-phenylacetophenone, and substituted alpha-ketols such as 2-methyl-2-hydroxypropiophenone. Examples of commercially available photoinitiators include IRGACURE 651 and DAROCUR 1173, both available from Ciba-Geigy Corp., Hawthorne, NY, and LUCERIN TPO from BASF, Parsippany, NJ. Examples of suitable thermal initiators include, but are not limited to, peroxides such as dibenzoyl peroxide, dilauryl peroxide, methyl ethyl ketone peroxide, cumene hydroperoxide, dicyclohexyl peroxydicarbonate, as well as 2,2-azo-bis(isobutryonitrile), and t-butyl perbenzoate. Examples of commercially available thermal initiators include VAZO 64, available from ACROS Organics, Pittsburgh, PA, and LUCIDOL 70, available from Elf Atochem North America, Philadelphia, PA. The polymerization initiator is used in an amount effective to facilitate polymerization of the monomers. Preferably, the polymerization initiator is used in an amount of about 0.1 part to about 5.0 parts, and more preferably, about 0.2 part to about 1.0 part by weight, based on 100 parts of the total monomer content.

When the first component is a material containing at least one ethylenically unsaturated group it may be partly polymerized to form a syrup prior to mixing with the second component of the hybrid material, followed by mixing with the second component of the hybrid material, coating of the mixture onto the surface a carrier web having recesses therein, and then completing the polymerization of the ethylenically unsaturated group-containing first component material. Alternatively, when the first component is a material containing at least one ethylenically unsaturated group it may be polymerized completely in the presence of the second component so long as reaction of the second component is not activated by the conditions used to polymerize the ethylenically unsaturated group-containing material.

Although the material used for the carrier web is not critical to the invention, such material is preferably selected to be flexible so that the tape of a curable adhesive precursor can be wound up to form a stable roll. Carrier webs useful in the present invention include films of polymeric materials, metals, paper or combinations of these materials, for example. Useful films also include thermoplastic polymer materials used alone or as coating on a substrate film such as a paper, metal or another polymeric film. Additional useful films are those that include a polymeric material selected from the group of materials consisting of polyethylene, polypropylene, polyolefin copolymers or blends of polyolefins such as, for example, a blend of polypropylene and LDPE (low density polyethylene) and/or LLDPE (linear low density polyethylene). Especially useful are thermoplastic films that can be cast onto a master surface that is formed with protrusions to be replicated to form recesses in one side of the carrier web while leaving the other side smooth. Useful replicating techniques include that disclosed in U.S. Pat. No. 4,576,850 (Martens), incorporated herein by reference.

The size and shape of the recesses in the embossed carrier web can be any that match the intended application. In one example, the depth of the recesses is from 2 micrometers (0.00008 inch) to 3 mm (0.127 inch). In another example the depth of the recesses is from 10 micrometers (0.0004 inch) to 1 mm (0.040 inch). In a further example the depth of the recesses is from 25 micrometers (0.001 inch) to 0.25 mm (0.010 inch). The depth of the recesses does not need to be uniform over the carrier web but may vary from recess to recess. Variations in the depth of the recesses can provide, for example, variations in the properties of the bond resulting from application and curing of the curable adhesive precursor.

The three dimensional shape of the recesses can easily be controlled if desired and tailored to specific applications. The three dimensional shapes have a cross-section which may be oval, circular, polygonal, rectangular, or irregular in shape wherein the cross-section is taken parallel to the surfaces of the carrier web. For example, the recesses could be shaped like inverted pyramids to provide pointed adhesive segments. Then the amount of bonding could be varied by the amount of pressure applied to the part to be bonded as each pyramid of adhesive flattens.

The recesses may form a regular pattern on the respective surface of the carrier web or they may be arranged in a partly or completely irregular pattern. The number of recesses per surface area unit is inversely proportional, though not necessarily linearally, to the depth of the recesses. For example, the deeper the recesses the fewer the number of recesses per surface area unit. The number of recesses per surface unit of the carrier web includes from 1 to 1,000,000 recesses/cm² (6.4 to 6,400,000 recesses/in²), from 10 to 10,000 recesses/cm² (64 to 64,000 recesses/in²), and from 100 to 1,000 recesses/cm² (640 to 6400 recesses/in²), for example.

The release characteristics of the release coatings, for example, 16 and 18 (FIG. 1), 36 and 40 (FIG. 2), and 57 and 59 (FIG. 3) are such that the desired degree of release is achieved and can be adjusted by known methods. Useful release coatings include one or more silicone based release materials such as those disclosed in Darrell Jones and Yolanda A. Peters, Silicone release coatings in Handbook of Pressure-Sensitive Adhesive Technology, ed. by Donatas Satas, 3rd ed., 1999, Warwick, RI, USA, pp. 652 - 683. Other suitable classes of release materials include fluorocarbon copolymers and long side chain polymers as disclosed in Donatas Satas, Release Coatings, ibid., pp. 632 - 651, for example. The release coatings, if present, preferably have a thickness of between 0.1 and 10 µm or between 1 and 5 µm.

An applicable method for increasing peel adhesion values in silicone release coatings for use in the above referenced coatings of the invention is by blending a silicone composed of polydimethysiloxane with less effective release material as disclosed in U.S. Pat. Nos. 3,328,482, (Northrup) and 4,547,431 (Eckberg). Another method for modifying such silicone release coatings is to chemically modify the silicone itself to increase the non-silicone content of the coating as described in U.S. Pat. Nos. 3,997,702 (Schurb) and 4,822,687 (Kessel). By employing such methods, the peel values for pressure sensitive adhesives can be readily increased from 10 g/cm of width to several hundred g/cm of width to adjust the ease of transfer of the adhesive from the embossed carrier web of the invention.

Cover sheets, as disclosed herein, may be manufactured from a wide range of materials such as metal foils, polymer films, paper films, or combinations thereof. Useful metal foils include siliconized metal foils, for example. The cover sheets preferably include polymeric materials such as, for example, those including polyvinylchloride, polyethylene terephthalate, polyolefins such as polyethylene or polypropylene, polyolefin copolymers or blends of polyolefins.

The thickness of the cover sheets is between 20 and 300 µm or between 30 and 150 µm.

Various additives or other ingredients may be added to the curable adhesive precursor to impart or modify particular characteristics of the ultimate adhesive composition. The additives should be added only at a level that does not materially adversely interfere with the adhesion or cause premature curing of the composition. For example, fillers (e.g. carbon black; nanoparticulate material such as alkoxysilane modified ceramics; thermally conductive materials such as boron nitride, aluminum oxide, silicon nitride and silicon carbide; fibers; glass, ceramic, metal or polymeric bubbles; metal oxides such as zinc oxide; and minerals such as talc, clays, silica, silicates, and the like); tackifiers; plasticizers; antioxidants; pigments; UV absorbers; and adhesion promoters, and the like may be added to modify adhesion, strength build-up, tack, and flexibility. Polymerization catalysts, and/or photoinitiators for example, can be added to initiate or speed curing. Electrically conductive particles, such as metal coated polymeric or glass beads or bubbles, flakes or fibers for example, may be added to provide adhesive bonding and electrical conduction. Useful conductive particles include solder material; graphite or metallic beads, flakes or fibers; and graphite or metal coated beads, flakes or fibers, for example. Tackifiers, such as hydroxyl functional tackifiers, including the "REAGEM" and "SYNFAC" brand of hydroxyl functional tackifiers available from Milliken Chemical Spartanburg, South Carolina, for example, can be added to the curable adhesive precursor to enhance wet-out properties and adhesion.

Additionally, fluxing materials may be added to the curable adhesive precursor to impart fluxing ability to the adhesive. Any fluxing agent can be added that does not materially adversely interfere with the adhesion or cause premature curing of the composition. Useful fluxing agents include acidic and chelating fluxing agents, for example. Useful chelating fluxing agents include, for example, those having both an aromatic hydroxyl oxygen atom and an imino group which are separated by two atoms (e.g., two carbon atoms) from each other (i.e., located on an atom beta to each other). The beta atom refers to those atoms located in a position beta to either the carbon or the nitrogen atoms of the imino group, or both. Examples of useful chelate fluxing agents as include Schiff base type compounds such as 2,2'-[1,4-phenylene-bis(nitrilomethylidyne)]bisphenol, 2,2'-[1,3-phenylene-bis(nitrilomethylidyne)]bisphenol, 2,2'-[1,2-phenylene-bis(nitrilomethylidyne)]bisphenol, 2,2'-[1,3-propane-bis(nitrilomethylidyne)]bisphenol, 2,2'-[1,2-ethane-bis(nitrilomethylidyne)]bisphenol, 2,2'-[1,2-propane-bis(nitrilomethylidyne)]-bisphenol, 2,2'-[1,2-cyclohexylbis(nitrilomethylidyne)]bisphenol, and 2-[[(2-hydroxyphenyl)imino]methyl]phenol.

The curable adhesive precursor transfer tapes of the present invention can be adhered to a substrate via an exposed surface of the curable adhesive precursor. When utilizing a transfer tape of the present invention that includes a cover sheet, as embodied in Figure 2, the carrier web in contact with the curable adhesive precursor layer can be removed prior to applying the curable adhesive precursor to a substrate. Typically, however, the curable adhesive precursor is applied to a substrate while the carrier web is in contact with the curable adhesive precursor.

The curable transfer tapes of the present invention may easily and precisely dispense the curable adhesive precursor to a substrate, whether the curable adhesive precursor remains in discrete segments, or discrete segments connected by a thin layer of continuous curable adhesive precursor. When the curable adhesive precursor remains in discrete segments, the curable adhesive precursor may be precisely applied to only those areas where a substrate contacts the curable adhesive precursor and pressure is applied. When the curable adhesive precursor is present in discrete segments connected by a thin layer of continuous curable adhesive precursor, the transfer tapes of the present invention still allow for ease and precision in dispensing the curable adhesive precursor. The ease and precision in dispensing the curable adhesive precursor including a thin layer of continuous curable adhesive precursor is due to the characteristic that the curable adhesive precursor is easily torn at the junction between where a substrate contacts the curable adhesive precursor and pressure is applied and either where no pressure is applied or no substrate contacts the curable adhesive precursor.

The curable adhesive precursor applied to the substrate can either remain in discrete segments or, if the curable adhesive precursor possesses macroscopic flow properties, can flow to produce an essentially continuous layer of curable adhesive precursor after application. The degree of macroscopic flow can be controlled and adjusted by the person skilled in the art without any undue experimentation.

When the curable adhesive precursor is a diffusible agent curable adhesive precursor the segmented curable adhesive precursor allows for increased cure rates. Without desiring to be bound by any particular theory, increased cure rates may be obtained due to improved apparent rates of diffusion and increased surface area directly exposed to a diffusible curing agent. For example, when a diffusible agent curable adhesive precursor is applied between two substrates, so as to bond them together, a series of channels result between the substrates through which the diffusible curing agent can travel. These channels effectively increase the surface area of the diffusible agent curable adhesive precursor that is exposed to the curing agent, thus increasing cure rates. Additionally, cure rates are improved because the diffusible curing agent can travel through the channels in the curable adhesive precursor rather than through the curable adhesive precursor itself in order to cure the center of the curable adhesive precursor. Thus, the diffusible agent has a reduced path length of diffusible agent curable adhesive precursor through which it must travel in order to cure the entire amount of curable adhesive precursor and therefore has an improved apparent rate of diffusion. This feature of increased cure rate may be obtained whether the curable adhesive precursor remains in discrete segments, or discrete segments connected by a thin layer of continuous curable adhesive precursor, or discrete segments connected by a thick layer of continuous curable adhesive precursor.

Conversely, the curable transfer tapes of the present invention, in addition to increasing cure rates of the diffusible agent curable adhesive precursor once applied to a substrate, inhibit the premature curing of the diffusible agent curable adhesive precursor prior to application to a substrate. The transfer tapes of the present invention include diffusible agent curable adhesive precursors contained in discrete recesses. The walls of these recesses effectively surround the diffusible agent curable adhesive precursor segments with a barrier that is essentially impermeable to diffusible curing agents thus inhibiting exposure to the diffusible curing agents and inhibiting premature curing. In cases where a thin layer of continuous diffusible agent curable adhesive precursor connects the segments of diffusible agent curable adhesive precursor, exposure to curing agents is greater than if no layer were present yet premature curing is still inhibited to a greater extent than if the curable adhesive precursor were simply coated as a continuous layer and not in segments. Therefore, during the packaging, storage, transportation, and handling of the curable adhesive precursor transfer tapes of the present invention a diffusible curing agent such as water vapor, for example, can only contact and cure the adhesive precursor segments exposed at the perimeter of the transfer tapes, if any. The diffusible agent curable adhesive precursor segments adjacent to these perimeter diffusible agent curable adhesive precursor segments are protected from premature curing by the carrier web surrounding these segments, and/or an optional cover liner.

Curing of curable adhesive precursors as disclosed herein is effected by exposure to heat, actinic radiation, or one or more diffusible curing agents. As stated above, such diffusible curing agents include water, water vapor, ethylene oxide, ammonia or combinations thereof. Actinic radiation includes electromagnetic radiation in the ultraviolet or visible range of the electromagnetic spectrum. The required amount of curing agent exposure to effect reaction is dependent upon various factors such as, for example, the nature and concentration of the curable adhesive precursor, the presence of reaction catalysts and/or initiators, the thickness of the curable adhesive precursor layer, the amount of surface area exposed to the curing agent, and the concentration of the curing agent. These factors can, however, be controlled and adjusted by the person skilled in the art without any undue experimentation.

### Test Methods

### Overlap Shear - Method A

Overlap shear strength was measured using chemically etched (sodium dichromate /sulfuric acid) aluminum substrates having the dimensions of 1 x 4 x 1/16 inches (2.5 x 10.2 x 0.16 centimeters = cm) in the following manner. The adhesive precursor-coated carrier web having a protective film covering the precursor -coated side was removed from the moisture impervious package it was stored in and the protective cover film peeled off. Next, a sample of the precursor -coated carrier web was placed onto the etched surface of the first aluminum substrate and rubbed down by hand using finger pressure. The liner was removed to provide a 1 x 1 inch (2.5 x 2.5 cm) area having the curable adhesive precursor on the first aluminum substrate. The second aluminum substrate was then placed on top the exposed adhesive precursor layer such that two aluminum substrates overlapped along their lengthwise dimension forming an adhesive precursor-containing area measuring 1 inch x 1 inch (2.54 centimeters x 2.54 centimeters (cm)). This assembly was then placed in a press at room temperature (75°F ±2°; 24°C ± 1°) under a pressure of 84 pounds per square inch (psi) (0.58 MegaPascals (MPa)) for 3 seconds. After removal from the press the bonded assemblies were stored at 75°F (24°C) and 50% relative humidity for various periods of time before measuring their overlap shear strength at room temperature using an Instron Mechanical Tester (available from Instron Corporation, Canton, MA) equipped with a 2000 pound load cell at a jaw separation rate of 2 inches/minute (5.1 cm/minute). The assemblies tested at 0 and 1 hours were conditioned at ambient conditions (70°F (21°C) / 23 % relative humidity). The reported value was an average of 3 samples.

### Overlap Shear - Method B

Overlap shear strength was measured using poly(methyl methacrylate) (PMMA) substrates having a thickness of about 0.22 inches (0.56 cm) and dimensions of 2 inches long by 1 inch wide (5.1 by 2.5 cm) in the following manner. The surfaces of the PMMA substrates to be bonded were wiped clean three times using light finger pressure with a Surpass Facial Tissue (Kimberly-Clark, Irving, TX) saturated with water:isopropanol/50:50 (w/w) solution. The protective cover liner was removed from the curable adhesive precursor-coated carrier web. The precursor-containing side of the carrier web was placed over an area 1/2 inch long by 1 inch wide (1.27 cm x 5.54 cm) on the PMMA substrate, and the curable adhesive precursor was transferred to the substrate by rubbing the exposed web surface using a squeegee and hand pressure. The carrier web was then was then removed leaving the adhesive precursor on the first PMMA substrate. The second PMMA substrate (also cleaned as described above) was then placed on top of the exposed curable adhesive precursor layer such that the two PMMA substrates overlapped along their lengthwise dimension forming a curable precursor-containing area measuring ½ inch long by 1 inch wide (1.27 cm x 5.54 cm). This assembly was pressed together using a rubber roller and hand pressure. Next, after a dwell time of at least 20 minutes at ambient temperature (75°F ±2°; 24°C ±1°C), the assembly was placed in an oven at 230°F (110°C) for 40 minutes to cure the adhesive precursor. After removing from the oven and allowing to cool to ambient temperature the bonded assembly was evaluated for overlap shear strength at room temperature using an Instron Mechanical Tester equipped with a 1000 pound load cell, wedge action grips, and a jaw separation rate of 2 inches/minute (5.1 cm/minute). The reported value is an average of 3 samples.

### Example 1

A segmented, curable adhesive precursor article was provided as follows. The following materials were added to a 1 pint (0.47 liter) paint can container which was then placed in a 250°F (121°C) oven to melt the materials therein: 19.5 parts by weight (pbw) of PPG 1025 (a polypropylene glycol having a molecular weight of about 1000 and a hydroxyl number between about 107 and about 115, available from Bayer Corporation, Pittsburgh, PA), 35 pbw of an amorphous macromer of octadecyl acrylate :isooctyl acrylate:N,N-dimethyl acrylamide / 30:35:35 (w:w:w) (which may be made as described U.S. Patent No. 5,908,700, Column 16, lines 6-19), RUCOFLEX S-105P-42 (poly(hexamethylene adipate), a crystalline, hydroxy-functional material having a calculated molecular weight of about 2610 and a hydroxyl number between about 40 and about 46, available from Bayer Corporation, Pittsburgh, PA), 12.6 pbw of REAGEM 5006 (a reactive hydroxylated tackifying adhesive resin, available from Sovereign Chemical Company, Akron, OH). Once melted, the mixture was stirred with a wooden tongue depressor to ensure thorough blending. The container was then put into a vacuum oven at 250°F (121 °C) for 3 hours to dry the blend. Next, the container with the dried blend was placed on a hot plate (Model 700-5011, available from Barnant Company, Barrington, IL), set on "Low" to give a temp between about 200 and 225°F (93 and 107°C) and put under a nitrogen purge. MDI (4,4'-diphenylmethane diisocyanate), 15.8 pbw, in flaked form, was then added and stirred using an air motor equipped with a stainless steel propeller blade. Finally, 0.4 pbw SILQUEST® A-189 Silane (gamma-mercaptopropyltrimethoxy silane, available from OSI Specialties, a division of Crompton Corporation, Greenwich, CT) was added into the mixture. The mixture was stirred for about 30 seconds and then placed in a vacuum oven at 250°F (121°C) for between 2 and 3 minutes. The degassed mixture was poured into a 0.1 gallon (0.38 liter) aluminum cartridge and sealed. The filled cartridge was aged at 160°F (71°C) for 24 hours to ensure complete reaction of the hydroxy-functional materials with MDI to form a mixture of isocyanate-terminated polyurethane prepolymers, i.e., a curable adhesive precursor.

The aged moisture curable adhesive precursor was hot melt die coated onto an extruded polypropylene film having embossed thereon a pattern of square recesses oriented at an angle of 45° to the web direction, with a center to center spacing of 0.02 inches (0.5 mm), a nominal ridge width of 0.002 inch (51 micrometer, µm), and a nominal recess depth of 0.002 inches (51 µm). The recesses, or pockets, were essentially flat at the bottom. This embossed liner (2-3 PPL EMB/Nat) 164Z, available from LOPAREX, Willowbrook, IL) had a nominal total thickness of 0.005 inches (127 µm) (with a 3 mil basis weight prior to embossing) and was coated on both the embossed side and flat backside with a silicone release coating. The coating temperature was between about 180°F and about 230°F (82°C and 110°C) and the adhesive precursor resin viscosity was about 10,000 centipoise (cps). A nominal coating thickness of 0.003 inches (76 µm), including the curable adhesive precursor material in the recesses, was obtained. This resulted in an adhesive precursor thickness of about 0.001 inches (25 µm) over the ridges separating the recesses. A 0.002 inch (51µm) thick biaxially oriented, flat (i.e., not embossed with a microstructure) polypropylene protective cover film having a silicone release coating on one side (1-2BOPPLA-164Z, available from LOPAREX, Willowbrook, IL) was laminated to the exposed adhesive precursor surface using a nip roller. The resulting microstructured liner having a room temperature tacky, moisture curable adhesive precursor coated thereon and protected with a cover film was stored in a moisture impermeable package until further use.

This coated adhesive precursor article was evaluated by first removing the protective cover liner, then placing the adhesive precursor article onto a nylon washer having an outside diameter of 0.56 inches (1.4 centimeter (cm)) and an inside diameter of 0.26 inches (0.66 cm) such that the precursor surface contacted the washer and then rubbing down by hand to ensure intimate contact. The microstructured liner was then removed from the washer by pulling back at an approximate angle of about 75 degrees. Visual inspection of a photograph taken by Charged Couple Device (CCD) camera at a magnification of about 20X revealed there was transfer of the curable adhesive precursor from the embossed liner to the washer only where there had been mutual contact. This demonstrates the ability to transfer a curable adhesive precursor to an irregular shape (e.g., one having a cutout in the middle) on only the desired area without the need for additional, processing steps that add cost, such as die cutting.

### Example 2

The effect of microchannels within an area of a segmented, moisture curable adhesive precursor on its cure rate was evaluated. The same adhesive precursor as used in Example 1 was coated between an embossed, microstructured liner and a flat protective cover film like those described in Example 1 using a notch bar-over-bed coating station, having a temperature setpoint for both the bed and bar of 180°F (82°C), with the notch bar pressed firmly by hand onto the cover liner. This resulted in an approximate gap setting of approximately 0.007 inches (0.18 mm). A nominal coating thickness of 0.003 inches (76 µm), including the curable adhesive precursor material in the recesses, was obtained. This resulted in a precursor thickness of about 0.001 inches (25.4 µm) over the ridges separating the recesses. The coated liner with the second, protective cover film on it was immediately placed in a foil bag with desiccant and sealed. The curable adhesive precursor article was later evaluated after various bond times as described in "Overlap Shear - Method A" above. The results are shown in Table 1 below.

### Comparative Example 1

Example 2 was repeated with the following modification. The microstructured liner was replaced with a coextruded flat film blend of polypropylene and polyethylene having a thickness of 0.003 inches (76 µm) and a having a silicone release coating on one side (1-3PPPEC-4000EX, available from LOPAREX, Willowbrook, IL) and stops were used to control the coater gap to give a coating thickness of about 3 mil (76µm) of adhesive precursor between the release liners. The results are shown in Table 1 below.

**Table 1**

| **Conditioning Time (hours)** | **Overlap Shear Strength (psi) (MegaPascals)** | |
|---|---|---|
| | **Example 2** | **Comparative Example 1** |
| 0 | 120 | 42 |
| | (0.83) | (0.29) |
| 1 | 140.7 | 45 |
| | (0.97) | (0.31) |
| 6 | 332.8 | 100.2 |
| | (2.30) | (0.69) |
| 24 | 309.7 | 218.7 |
| | (2.14) | (1.51) |
| 48 | 314 | 368 |
| | (2.16) | (2.54) |
| 72 | 378.5 | 374 |
| | (2.61) | (2.58) |

The results in Table 1 show that a layer of moisture curing adhesive precursor provided in a pattern having microchannels exhibits a more rapid buildup of bond strength than does a layer of moisture curing adhesive precursor lacking such channels.

### Example 3 and Comparative Example 2

A segmented, curable adhesive precursor blend of acrylic polymer and epoxy monomer resins was provided in segmented form by coating a blend of monomeric materials onto a microstructured liner and irradiating with UV light. More specifically, 958.5 pbw EPON™ 828 (a liquid diglycidyl ether of bisphenol-A resin, available from Resolution Performance Products, Houston, TX) and 319.5 pbw EPON™ 1001 F (a solid diglycidyl ether of bisphenol-A resin, available from Resolution Performance Products, Houston, TX) were added to a one gallon glass jar and stirred at about 1000 revolutions per minute (rpm) while heating on a hot plate to 194°F (90°C) to dissolve the solid epoxy resin. The epoxy mixture was then removed from the hot plate and allowed to cool to about 158°F (70°C). Next, a combination of 193.1 pbw isooctyl acrylate (IOA), 576.5 pbw 2-phenoxy ethyl acrylate (2-POEA; available from CPS Chemicals, Old Bridge, NJ), 650.0 pbw isobornylacrylate (IBA, available from San Esters Corporation, New York, NY), and 4.3 pbw KB-1 (2,2-Dimethoxy-2-phenylacetophenone, available from Sartomer Company, Exton, PA) was added to the epoxy mixture with stirring. Stirring was continued until the temperature reached about 86°F (30°C) at which point 509.8 pbw ANCAMINE™ 2337 (a modified aliphatic amine, available from Air Products, Allentown, PA) was added and stirred for about 45 minutes to give a uniform appearing dispersion. To this was added 99.4 pbw AEROSIL™ R972 (a hydrophobic fumed silica, available from Degussa, Hanau, Germany) with stirring for another 30 minutes. Finally, 21.3 pbw glass bubbles (GB) (3M™ Scotchlite™ K15/300 having a mean volume diameter of 60 µm, available from 3M Company, St. Paul, MN) were added with mixing at first about 300 rpm then briefly at 700 rpm. The resulting uniform dispersion was then degassed, followed by capping the container and putting it on a roller for several hours.

The adhesive precursor dispersion was then coated onto an extruded, embossed polypropylene film having a pattern of recesses like that described in Example 1.

The adhesive precursor was coated using a notch bar-over-bed coater. The bar was set to lightly contact the film backing and was unclamped. The liner with precursor dispersion coated thereon was passed through a chamber having a length of between 50 and 60 feet (15.2 and 18.3 meters) at a speed of about 10 feet/minute (3.0 meters/minute) wherein it was exposed to UV (blacklight) irradiation under a nitrogen purge to provide a total measured energy dosage of 300 milliJoules/centimeter² (National Institute of Standards and Technology (NIST) units). A nominal coating thickness of just over 0.002 inches (51 µm), including the material in the recesses, was obtained. A very thin layer of adhesive precursor was present over the ridges separating the recesses.

Comparative Example 2, having a continuous adhesive precursor coating with a thickness of about 0.020 inches (510 µm), was provided in a similar manner, but using a flat (i.e., un-embossed) liner. The resulting adhesive precursor coatings were tacky at room temperature. A protective siliconized film cover liner was placed over the exposed adhesive precursor surface of the embossed carrier liner. These were both evaluated as described in "Overlap Shear - Method B" above. The results are shown in Table 2 below.

**Table 2**

| **Overlap Shear Strength (psi) (MegaPascals)** | |
|---|---|
| **Example 3** | **Comparative Example 2** |
| 691 | 800 |
| (4.75) | (5.50) |

It was observed that, for Example 3, only that adhesive area which made intimate contact with the substrate was transferred from the liner while the area of the carrier that did not make intimate contact still retained the coated adhesive precursor. The results in Table 2 demonstrate that a segmented curable adhesive precursor coating may be provided which exhibits an overlap shear strength comparable to that obtained with a continuous adhesive precursor film of the same formulation.

### Example 4

A 0.004 inch (200 µm) thick sheet of 3M™ Scotch-Weld™ Structural Adhesive Film AF 191 (a thermosetting, modified epoxy resin adhesive film, available from 3M Company, St. Paul, MN) was placed onto the embossed side of a liner like that described in Example 1, which was resting on the bed of a heated notch bar-over-bed coating station, and allowed to soften. The bed temperature was preheated to a setpoint of 194°F (90°C) and the bar temperature to a setpoint of 248°F (120°C). The liner with curable adhesive precursor thereon was then pulled through the coater at a speed of about 1 foot/minute (0.3 meters/minute) with the notch bar pressed firmly, by hand, onto the embossed surface of the liner. The softened curable adhesive precursor film filled the recesses of the liner with little or no adhesive precursor over the raised ridges of the liner. A second sheet of the embossed liner was placed with its embossed surface in contact with the exposed adhesive precursor. This served as a protective cover liner. The protected adhesive precursor-coated embossed liner was stored at about 5°F (-15°C) for one week. After removing the protective cover liner, a section of the adhesive precursor-coated embossed sheet was warmed to 104°F (40°C) to become tacky. A 0.50 inch (1.27 cm) diameter, flat-topped aluminum stub (an SEM specimen mount, Cambridge style, available as Catalog No. 16111 from Ted Pella, Inc., Redding, CA) was pressed using hand pressure onto the adhesive precursor-coated sided of embossed liner for a few seconds and removed. Visual (unaided eye) inspection showed discrete segments of adhesive precursor material on the stub where it had made contact with the coated embossed liner, while those areas of the coated liner that did not contact the stub retained adhesive precursor therein. The stub with adhesive precursor thereon was placed onto a glass microscope slide with the precursor in contact with the glass and cured in a 338°F (170°C) oven for 1 hour. Visual inspection showed the adhesive precursor segments had flowed to form a continuous film with a few small voids. It is anticipated that alternative methods of application would provide void free bonds. Pushing sideways on the aluminum stub could not remove it from the glass without breakage of the glass.

### Example 5

A segmented, curable UV-activatable adhesive precursor was provided as follows. To a glass jar were added 30.4 pbw EPON™ 828 (a liquid epoxy resin having an epoxy equivalent weight of between about 185 and about 192, available from Resolution Performance Products, Houston, TX) and 8.8 pbw VORANOL™ 230-238 (a liquid polyol adduct of glycol and propylene oxide having a number average molecular weight of about 700 and a hydroxyl equivalent weight of about 38, available from Dow Chemical Company, Midland, MI). These were mixed in a glass jar at a temperature of about 90°C to provide a uniform solution. To a Brabender Plasticorder™ mixer (Model No. PL2000, available from C.W. Brabender Instruments, Inc., South Hackensack, NJ) were added 30.9 pbw EPON™ 100 F epoxy resin having an epoxy equivalent weight of between about 525 and about 550, available from Resolution Performance Products, Houston, TX) and 28.9 pbw LEVAPREN™ 700HV (an ethylene/vinyl acetate (hereinafter referred to as "EVA") copolymer containing 70% by weight vinyl acetate, and having a Mooney viscosity of 27 as measured by ASTM D 1646, available from Bayer Corporation, Pittsburgh, PA). These were mixed at a temperature of 90°C until homogeneous (about 20 minutes). The heated liquid mixture of EPON™ 828 and VORANOL™ 230-238 was then poured into the Brabender Plasticorder mixer, and blending was continued at 90°C until a homogeneous mixture was obtained (about 10 minutes). Finally, 1.0 pbw UVOX™ UVI 6974 (a triarylsulfonium complex salt, available from Union Carbide, Danbury, CT) was added and mixing was continued for about 5 more minutes at 90°C to provide a molten adhesive precursor composition. This was stored by wrapping it in a brown silicone-coated paper liner. The cooled precursor composition was stiff but deformable.

A 10 to 15 gram amount of this deformable curable adhesive precursor was placed onto the embossed side of a liner like that described in Example 1, which was resting on the bed of a heated notch bar-over-bed coating station. The bed temperature was preheated to a setpoint of 176°F (80°C) and the bar temperature to a setpoint of 212°F (100°C). Once the precursor composition had become molten, the liner with adhesive precursor thereon was pulled through the coater at a speed of about 1 foot/minute (0.3 meters/minute) with the notch bar pressed firmly, by hand, onto the embossed surface of the liner. The molten adhesive precursor material filled the recesses of the liner with little or no precursor over the ridges between recesses. A second sheet of the embossed liner was placed with its embossed surface in contact with the exposed adhesive precursor. This served as a protective cover liner. The protected adhesive precursor-coated embossed liner was stored in a lightproof box until tested.

After removing the protective cover liner, an aluminum stub, like that used in Example 4, was pressed by hand onto the adhesive precursor-coated sided of embossed liner for a few seconds and removed. Visual (unaided eye) inspection showed discrete segments of curable adhesive precursor material on the stub where it had made contact with the coated embossed liner, while those areas of the coated liner that did not contact the stub retained adhesive precursor therein. The precursor material on the stub was exposed to UV light using a desk lamp (Dayton 2V346E), which contained two 18 inch (46 cm) long UV lamps (General Electric F15T8 BL) for about 2 minutes at a distance of about 2 inches (5 cm). The stub with irradiated adhesive precursor thereon was placed onto a glass microscope slide with the precursor in contact with the glass and cured in a 338°F (170°C) oven for 1 hour. Visual inspection showed the adhesive precursor segments had flowed to form a continuous film with a few small voids. It is anticipated that alternative methods of application would provide void free bonds. Pushing sideways on the aluminum stub could not remove it from the glass without breakage of the glass.

### Example 6 and Comparative Example 3

A curable adhesive precursor containing a fluxing agent was provided in segmented form as follows. To a small plastic container were added 39.1 pbw diglycidyl-9,9-bis(4-hydroxyphenyl)fluorene (a solid epoxy resin having an epoxy equivalent weight of between about 240 and about 270, and a melting point between about 80 and 82°C), and 16.7 pbw purified EPON™ 828 (a liquid epoxy resin having an epoxy equivalent weight of between about 185 and about 192, available from Resolution Performance Products, Houston, TX), 13.9 pbw PAPHEN™ PKHP-200 (a micronized phenoxy resin having a number average molecular weight of between about 10,000 and about 16,000 and a hydroxyl equivalent weight of about 284, available from InChem Corporation, Rock Hill, SC) and 29.8 pbw 1,3-bis(salicylidene)-propanediamine. Purification of the epoxy resins was carried out as stated in co-pending application serial number 09/946,013. These were heated to 125°C in an oven then removed and mixed for 1 minute at 3000 rpm at room temperature with a Speed Mixer^{TM} DAC 150 FV (Flack Tek Inc., Landrum, SC). This process was repeated 3 or 4 times to provide a clear melt blend. The temperature was then allowed to cool to 85°C and 0.5 pbw cobalt (II) imidazolate (which may be prepared as described in Example 3 of U.S Patent No. 3,792,016) was added with mixing as described above to provide a uniform dispersion of a curable fluxing agent-containing adhesive precursor.

This dispersion was used to coat an embossed liner like that described in Example 1 (for Example 6) and a flat (unembossed) 0.002 inch (51 µm) thick polyester film liner treated with silicone release on one side (Silicone-treated PET 7200, available from LOPAREX, Willowbrook, IL) (for Comparative Example 3) using a heated notch bar-over-bed coating station with the bar and bed temperatures set at approximately 85°C. The resulting coated liners had an adhesive coating thickness of about 0.002 inches (51 µm). In the case of the embossed liner a very thin layer of adhesive precursor connecting the segments of precursor in the recesses. In the case of the flat liner, a continuous film of adhesive precursor was obtained. The precursor material was soft, slightly tacky to the touch.

### Example 7

Example 7 was made using the same methods and materials as described for Example 2, with the following modification. Jet-Weld TS-230 (available from 3M, St. Paul, MN) was used as the curable adhesive precursor. A nominal coating thickness of 0.003 inches (76 µm), including the curable adhesive precursor material in the recesses, was obtained. This resulted in a precursor thickness of about 0.001 inches (25.4 µm) over the ridges separating the recesses. The coated curable adhesive precursor article was evaluated after various bond times as described in "Overlap Shear - Method A" above, with the following modifications. The aluminum substrates were warmed in an oven set to 160°F (71 °C) and the bonds were made using hand pressure within 5 minutes of removal of the aluminum substrates from the oven. The results are shown in Table 3 below.

### Comparative Example 4

Comparative Example 4 was made using the same methods and materials as described for Comparative Example 1, with the following modification. Jet-Weld TS-230 (available from 3M, St. Paul, MN) was the curable adhesive precursor. A curable adhesive precursor thickness of about 3 mil (76µm) was obtained. The curable adhesive precursor article was evaluated after various bond times as described in "Overlap Shear - Method A" above, with the following modifications. The aluminum substrates were warmed in an oven set to 160°F (71 °C) and the bonds were made using hand pressure within 5 minutes of removal of the aluminum substrates from the oven. The results are shown in Table 3 below.

### Example 8

Example 8 was made using the same methods and materials as described in Example 2 with the following modification. The coater was set to give a coating thickness of 0.013 inches (0.33 mm). A nominal coating thickness of 0.013 inches (330 µm), including the curable adhesive precursor material in the recesses, was obtained. This resulted in a precursor thickness of about 0.011 inches (279 µm) over the ridges separating the recesses. The curable adhesive precursor article was evaluated after various bond times as described in "Overlap Shear - Method A" above. The results are shown in Table 3 below.

### Comparative Example 5

Comparative Example 5 was made using the same methods and materials as described for Comparative Example 1 with the following modification. The coater was set to give a coating thickness of 0.013 inches (0.33 mm). The curable adhesive precursor article was evaluated after various bond times as described in "Overlap Shear - Method A" above. The results are shown in Table 3 below.

**Table 3**

| **Conditioning Time (hours)** | **Overlap Shear Strength (psi) (MegaPascals)** | | | |
|---|---|---|---|---|
| | **Example 7** | **Comparative Example 4** | **Example 8** | **Comparative Example 5** |
| 0 | N.D. | N.D. | 12.7 | 14.0 |
| | | | (0.088) | (0.096) |
| 1 | 249 | 194 | 13.0 | 15.7 |
| | (1.72) | (1.34) | (0.090) | 0.11) |
| 4 | 230 | 568 | 17.7 | 18.7 |
| | (1.59) | (3.92) | (0.12) | (0.13) |
| 6 | 316 | 418 | 20.7 | 21.7 |
| | (2.18) | (2.88) | (0.14) | (0.15) |
| 24 | 759 | 591 | 109 | 73.0 |
| | (5.23) | (4.07) | (0.75) | (0.50) |

| | | | | |
|---|---|---|---|---|
| N.D. = not determined | | | | |

The results in Table 3 show that, after 24 hours, a layer of moisture curing adhesive precursor provided with microchannels has developed a greater overlap shear strength than a layer of moisture curing adhesive precursor lacking such channels.

## Claims

1. A curable transfer tape comprising :
a) a carrier having two oppositely parallel surfaces wherein at least one of said surfaces comprises a series of recesses therein, and
b) transferable segments of a curable adhesive precursor in said recesses of said carrier, said transferable segments being transferable from said recesses to a substrate prior to curing of said curable adhesive precursor, and said curable adhesive precursor comprising material that achieves its maximum bond strength without exhibiting pressure-sensitive adhesive characteristics after curing.

2. A-curable transfer tape of claim 1, wherein said recesses inhibit the lateral flow of the curable adhesive precursor under ambient conditions.

3. A curable transfer tape of claim 1, wherein said curable adhesive precursor comprises a heat or actinic radiation curable adhesive precursor.

4. A curable transfer tape of claim 1, wherein said curable adhesive precursor comprises a diffusible agent curable adhesive precursor.

5. A curable transfer tape of claim 4, wherein said diffusible agent curable adhesive precursor is selected from a polyurethane prepolymer and a silane containing curable adhesive precursor.

6. A curable transfer tape of claim 4, wherein the diffusible agent curable adhesive precursor further comprises a layer of continuous diffusible agent curable adhesive precursor connecting the diffusible agent curable adhesive precursor segments.

7. A curable transfer tape of claim 1, wherein the curable adhesive precursor further comprises a filler selected from silica, glass beads or bubbles, metal beads or bubbles, polymeric beads or bubbles, or combinations thereof.

8. A curable transfer tape of claim 1, wherein the curable adhesive precursor further comprises conductive particles.

9. A curable transfer tape of claim 1, wherein the curable adhesive precursor further comprises a fluxing agent selected from 2,2'-[1,4-phenylene-bis(nitrilomothylidyne)]bisphenol, 2,2'-[1,3-phenylene-bis(nitrilomethylidyne)]bisphenol, 2,2'-[1,2-phenylene-bis(nitrilomethylidyne)]bisphenol, 2,2'-[1,3-propane-bis(nitrilomethylidyne)]bisphenol, 2,2'-[1,2-ethane-bis(nitrilomethylidyne)]bisphenol, 2,2'-[2,2-propane-bis(nitrilomethylidyne)]-bisphenol, 2,2'-[1,2-cyclohexylbis(nitrilomethylidyne)]bisphenol, 2-[[(2-hydroxyphenyl)imino]methyl]phenol, or combinations thereof.

10. A curable transfer tape of claim 1, wherein the recesses are three-dimensional and have an oval, circular, rectangular, irregular, or polygonal cross-sectional shape, wherein the cross-section is taken parallel to the surfaces of said carrier.

11. A curable transfer tape of claim 1, wherein the surfaces of said recesses are coated with a release coating.

12. A curable transfer tape of claim 1 wherein the transfer tape further comprises a cover sheet over said recesses, said cover sheet being releasable and removable from tho tape to expose said curable adhesive precursor.

## Patentansprüche

1. Härtbares Transferband, aufweisend:
a) einen Träger mit zwei gegenüberliegend parallelen Oberflächen, wobei mindestens eine der Oberflächen eine Reihe von Aussparungen darin aufweist, und
b) übertragbare Segmente eines härtbaren Klebevorläufers in den Aussparungen des Trägers, wobei die übertragbaren Segmente vor dem Härten des härtbaren Klebevorläufers von den Aussparungen auf ein Substrat übertragbar sind und der härtbare Klebevorläufer Material aufweist, das seine maximale Haftfestigkeit erreicht, ohne nach dem Härten Haftkleberkennzeichen aufzuweisen.

2. Härtbares Transferband nach Anspruch 1, wobei die Aussparungen den seitlichen Fluss des härtbaren Klebevorläufers unter Umgebungsbedingungen hemmen.

3. Härtbares Transferband nach Anspruch 1, wobei der härtbare Klebevorläufer einen durch Wärme oder chemisch wirksame Strahlung härtbaren Klebevorläufer aufweist.

4. Härtbares Transferband nach Anspruch 1, wobei der härtbare Klebevorläufer einen durch ein diffusionsfähiges Agens härtbaren Klebevorläufer aufweist.

5. Härtbares Transferband nach Anspruch 4, wobei der durch ein diffusionsfähiges Agens härtbare Klebevorläufer aus einem Polyurethan-Vorpolymer und einem silanhaltigen härtbaren Klebevorläufer ausgewählt ist.

6. Härtbares Transferband nach Anspruch 4, wobei der durch ein diffusionsfähiges Agens härtbare Klebevorläufer ferner eine Schicht von fortlaufendem, durch ein diffusionsfähiges Agens härtbarem Klebevorläufer aufweist, der die Segmente des durch ein diffusionsfähiges Agens härtbaren Klebevorläufers verbindet.

7. Härtbares Transferband nach Anspruch 1, wobei der härtbare Klebevorläufer ferner einen Füllstoff aufweist, der aus Siliziumdioxid, Glaskügelchen oder -blasen, Metallkügelchen oder -blasen, Polymerkügelchen oder -blasen oder Kombinationen davon ausgewählt ist.

8. Härtbares Transferband nach Anspruch 1, wobei der härtbare Klebevorläufer ferner leitfähige Partikel aufweist.

9. Härtbares Transferband nach Anspruch 1, wobei der härtbare Klebevorläufer ferner ein Flussmittelagens aufweist, das aus 2,2'-[1,4-Phenylenbis(nitrilomethylidin)]bisphenol, 2,2'-[1,3-Phenylenbis(nitrilomethylidin)]bisphenol, 2,2'-[1,2-Phenylenbis(nitrilomethylidin)]bisphenol, 2,2'-[1,3-Propanbis(nitrilomethylidin)]bisphenol, 2,2'-[1,2-Ethanbis(nitrilomethylidin)]bisphenol, 2,2'-[1,2-Propanbis(nitrilomethylidin)]bisphenol, 2,2'-[1,2-Cyclohexylbis(nitrilomethylidin)]bisphenol, 2-[[2-Hydroxyphenyl)imino]methyl]phenol oder Kombinationen davon ausgewählt ist.

10. Härtbares Transferband nach Anspruch 1, wobei die Aussparungen dreidimensional sind und eine ovale, kreisförmige, rechteckige, unregelmäßige oder polygonale Querschnittsform aufweisen, wobei der Querschnitt parallel zu den Oberflächen des Trägers genommen ist.

11. Härtbares Transferband nach Anspruch 1, wobei die Oberflächen der Aussparungen mit einer Trennbeschichtung beschichtet sind.

12. Härtbares Transferband nach Anspruch 1, wobei das Transferband ferner eine Abdeckfolie über den Aussparungen aufweist, wobei die Abdeckfolie zum Freilegen des härtbaren Klebevorläufers von dem Band lösbar und abnehmbar ist.

## Revendications

1. Ruban de transfert durcissable comprenant :
a) un support comportant deux surfaces parallèles situées de façon opposée dans lequel l'une au moins desdites surfaces comprend une série de creux situés dans celle-ci, et
b) des segments transférables d'un précurseur d'adhésif durcissable dans lesdits creux dudit support, lesdits segments transférables étant transférables à partir desdits creux à un substrat avant le durcissement dudit précurseur d'adhésif durcissable, et ledit précurseur d'adhésif durcissable comprenant un matériau qui atteint sa force d'adhérence maximum sans présenter de caractéristiques d'adhésivité sensible à la pression après le durcissement.

2. Ruban de transfert durcissable selon la revendication 1, dans lequel lesdits creux entravent l'écoulement latéral du précurseur d'adhésif durcissable dans les conditions ambiantes.

3. Ruban de transfert durcissable selon la revendication 1, dans lequel ledit précurseur d'adhésif durcissable comprend un précurseur d'adhésif durcissable par la chaleur ou par un rayonnement actinique.

4. Ruban de transfert durcissable selon la revendication 1, dans lequel ledit précurseur d'adhésif durcissable comprend un précurseur d'adhésif durcissable par un agent diffusible.

5. Ruban de transfert durcissable selon la revendication 4, dans lequel ledit précurseur d'adhésif durcissable par un agent diffusible est sélectionné parmi un prépolymère polyuréthane et un précurseur d'adhésif durcissable contenant un silane.

6. Ruban de transfert durcissable selon la revendication 4, dans lequel le précurseur d'adhésif durcissable par un agent diffusible comprend en outre une couche de précurseur d'adhésif continu durcissable par un agent diffusible raccordant les segments de précurseur d'adhésif durcissable par un agent diffusible.

7. Ruban de transfert durcissable selon la revendication 1, dans lequel le précurseur d'adhésif durcissable comprend en outre une charge sélectionnée parmi la silice, des billes ou des sphères creuses en verre, des billes ou des sphères creuses en métal, des billes ou des sphères creuses polymères, ou des combinaisons de celles-ci.

8. Ruban de transfert durcissable selon la revendication 1, dans lequel le précurseur d'adhésif durcissable comprend en outre des particules conductrices.

9. Ruban de transfert durcissable selon la revendication 1, dans lequel le précurseur d'adhésif durcissable comprend en outre un fondant sélectionné parmi le 2,2'-[1,4-phénylène-bis(nitrilométhylidyne)]bisphénol, le 2,2'-[1,3-phénylène-bis(nitrilométhylidyne)]bisphénol, le 2,2'-[1,2-phénylène-bis(nitrilométhylidyne)]bisphénol, le 2,2'-[1,3-propane-bis(nitrilométhylidyne)]bisphénol, le 2,2'-[1,2-éthane-bis(nitrilométhylidyne)]bisphénol, le 2,2'-[1,2-propane-bis(nitrilométhylidyne)]bisphénol, le 2,2'-[1,2-cyclohexyl-bis(nitrilométhylidyne)]bisphénol, le 2-[[(2-hydroxyphényl)imino]méthyl]phénol, ou des combinaisons de ceux-ci.

10. Ruban de transfert durcissable selon la revendication 1, dans lequel les creux sont tridimensionnels et ont une forme de section transversale ovale, circulaire, rectangulaire, irrégulière, ou polygonale, la section transversale étant prise parallèlement aux surfaces dudit support.

11. Ruban de transfert durcissable selon la revendication 1, dans lequel les surfaces desdits creux sont revêtues d'un revêtement anti-adhésif.

12. Ruban de transfert durcissable selon la revendication 1, dans lequel le ruban de transfert comprend en outre une feuille de recouvrement pardessus lesdits creux, ladite feuille de recouvrement étant amovible et pouvant être retirée du ruban pour exposer ledit précurseur d'adhésif durcissable.
